# EUROPÄISCHE PATENTSCHRIFT

(11) **EP 0 948 108 B1**
(45) Veröffentlichungstag und Bekanntmachung des Hinweises auf die Patenterteilung: **14.05.2003**
(21) Anmeldenummer: 99104081.7
(22) Anmeldetag: 18.03.1999
(51) Int. Cl.: H02G 3/04, F16L 11/12, F16L 3/26, H02G 3/30

(54) **Wellrohr mit Fuss**
Corrugated tubing with foot
Tube annelé avec pied

(30) Priorität: 03.04.1998 DE 19815137; 26.08.1998 DE 19838793
(43) Veröffentlichungstag der Anmeldung: 06.10.1999
(73) Patentinhaber: Fränkische Rohrwerke Gebr. Kirchner GmbH & Co., 97486 Königsberg/Bayern (DE)
(72) Erfinder: Hölzer, Willi, 97486 Königsberg (DE); Krauss, Manfred, 97084 Würzburg (DE); Neubauer, Tilo, 97486 Königsberg (DE); Pfister, Carsten, 97526 Sennfeld (DE)
(74) Vertreter: Schwabe - Sandmair - Marx

(56) Entgegenhaltungen:
- DE-A- 4 334 732
- DE-A- 19 615 852
- FR-A- 2 554 985

## Beschreibung

Die Erfindung betrifft ein Wellrohr, das mittels einer Befestigungseinrichtung an beliebigen Gegenständen befestigt werden kann. Ferner betrifft die Erfindung insbesondere auch eine Wellrohrbefestigungsanordnung mit einem Wellrohr gemäß der Erfindung und einer Befestigungseinrichtung.

Im Stand der Technik sind diverse verschiedene Arten von Wellrohren bekannt. Die je nach Einsatzzweck zur Aufnahme beispielsweise elektrischer Leitungen an bestimmten Gegenständen, beispielsweise im Motorraum eines Fahrzeugs, in einem Kabelschacht oder dergleichen, festgelegt werden. Hier gibt es diverse Verfahrensweisen, beispielsweise spezielle Halterungsschellen, Halterungen mit Klemmbacken, und dergleichen mehr, um die Wellrohre an vorgegebenen Gegenständen festlegen zu können.

Es bereitet jedoch häufig Probleme für Wellrohre eine passende Befestigung vorzusehen. So werden auch heute noch überwiegend Kabelbinder verwendet, um eine Festlegung eines Wellrohres vorzunehmen. Dies führt unter anderem auch zu Vibrationen, die gerade im Motorraum eines Kraftfahrzeuges unerwünscht sind, da sie auch den Geräuschpegel in der Fahrgastzelle erhöhen.

In der FR-A-2 554 985 ist ein Wellrohr zur Aufnahme von Elektrokabeln offenbart, das zwecks Verbindung mit anderen Wellrohren radial angeordnete Ausstülpungen und Lagerungsaufnahmen aufweist. Es ist eine Aufgabe gemäß der vorliegenden Erfindung, ein Wellrohr bzw. eine Wellrohrbefestigungsanordnung zu schaffen, die integral die Möglichkeit zu seiner Festlegung umfasst.

Diese Aufgabe wird durch ein Wellrohr bzw. eine Wellrohrbefestigungsanordnung gemäß der vorliegenden Erfindung gelöst.

Zweckmäßige Ausführungsformen der erfindungsgemäßen Wellrohrbefestigungsanordnung bzw. des erfindungsgemäßen Wellrohres gehen aus den Unteransprüchen hervor.

Die gemäß der Erfindung zu erzielenden Vorteile beruhen darauf, dass ein Wellrohr bereit gestellt wird, das eine Eingriffserstreckung senkrecht zur Längserstreckungsrichtung des Wellrohres selbst aufweist. Dabei umfasst die Eingriffserstreckung erfindungsgemäß in Umfangsrichtung des Wellrohrs einen größer dimensionierten Abschnitt, der radial von dem Innendurchmesser des Rohres weiter entfernt ist, als ein in Umfangsrichtung des wellrohres kleinen dimensimierter Abschnitt, so daß sich ein Eingrittsbereich ergibt, der hinterschnitten ist. Auf diese Weise können diverse verschiedene Strukturen für Wellrohre vorgesehen werden, die ein Hintergreifen bspw. durch Aufklipsen oder Aufschieben ermöglichen. Als Beispiel für derartige Strukturen können beispielsweise im Querschnitt des Wellrohres pilzartige Formen, hakenartige Formen, beliebige Arten von hinterschnittenen Stegen oder dergleichen angesehen werden. Besonders vorteilhaft ist dabei eine Pilzform bzw. eine der Pilzform nahekommende Eingriffserstreckung, da diese in einem Korrugator im selben Arbeitsgang mit dem Wellrohr hergestellt werden kann. Andere Formen der Eingriffserstreckung können zwar auch vorteilhaft sein, bergen jedoch immer die Problematik, dass eine Trennebene der Halbformen eines Korrugators, egal wie diese relativ zu dem Wellrohr mit Merkmalen gemäß der Erfindung angeordnet ist, nicht so zu dem Wellrohr angeordnet werden kann, daß eine problemfreie Trennung eines Wellrohres mit Merkmalen gemäß der Erfindung aus den sich öffnenden Halbformen bzw. Halbkokillen bei der Herstellung leicht möglich wäre. Derartige Strukturen, die sich nicht in einem Korrugator integral mit dem Wellrohr herstellen lassen, müssen nachträglich in das Rohr eingeprägt, an dieses angesetzt oder sonstwie in oder an dem Rohr vorgesehen werden.

Vorteilhafterweise ist natürlich dem Wellrohr eine Befestigungseinrichtung zugeordnet, die komplementär zu der Eingriffserstreckung ausgebildet ist, um mit der Eingriffserstreckung in einen Befestigungseingriff treten zu können.

Das erfindungsgemäße Wellrohr mit der Befestigungseinrichtung zusammen bildet eine ebenfalls erfindungsgemäße Wellrohrbefestigungsanordnung.

Vorteilhafterweise ist die Eingriffserstreckung bzw. sind die Eingriffserstreckungen nur auf bzw. in den Wellenbergen des Wellrohres ausgebildet. Dabei wird es besonders bevorzugt, daß das ansonsten beim Korrugationsprozeß für die Ausbildung der Wellung heranzuziehende Material entsprechend in eingriffserstreckungsförmige Ausnehmungen in den Halbformen des Korrugators hineingezogen bzw. hineingepreßt wird (durch Über- bzw. Unterdruck), um die Eingriffserstreckungen auszubilden. Dabei können die Eingriffserstreckungen auf einer oder mehreren der Wellenberge in etwa die Höhe eines Wellenberges selbst erhalten.

Wie bereits angedeutet, kann es zu bevorzugen sein, wenn die Eingriffserstreckung bzw. die Eingriffserstreckungen nicht entlang der Gesamtlänge eines Wellrohres mit Merkmalen gemäß der Erfindung ausgebildet ist, sondern lediglich über eine begrenzte Anzahl von bevorzugt nebeneinanderliegenden Wellenbergen. Es wäre natürlich auch möglich, jeden zweiten Wellenberg mit einer Eingriffserstreckung zu versehen, bzw. jede dritte, vierte, usw. der Wellungen.

Wenn eine Festlegung des Wellrohres an einer beliebigen Stelle gewünscht wird, muß das Wellrohr natürlich über seine Gesamtlänge mit der Eingriffserstreckung versehen sein.

Natürlich können die Eingriffserstreckungen auch außerhalb der Wellungen auf den Wellenbergen beim Korrugationsprozeß erzeugt werden. Dabei würden die Eingriffserstreckungen jedoch über die Wellungen des Wellrohres und damit über den Durchmesser des Wellrohres hinweg erstreckt sein, wodurch die Abmessungen des Wellrohres vergrößert werden würden. Zusätzlich wäre mehr Kunststoffmaterial notwendig, um entsprechende Wellrohre mit Merkmalen gemäß der Erfindung herzustellen.

Die Befestigungseinrichtung umgreift die Eingriffserstreckung bzw. Eingriffserstreckungen, um in einen Halteeingriff mit der Eingriffserstreckung zu gelangen. Natürlich kann die Befestigungseinrichtung auch in die Eingriffserstreckung, so diese entsprechend ausgebildet ist, eingreifen. Auch ein teilweises Umgreifen kombiniert mit einem teilweisen eingreifen ist je nach Ausbildung der Eingriffserstreckung ohne weiteres ausführbar. Dabei haben verschiedene Versuche jedoch gezeigt, daß eine pilzförmige bzw. T-förmige Ausbildung der Eingriffserstreckung besonders vorteilhaft ist, da diese mechanisch stabil ist, und sich insbesondere auch aufgrund ihrer Symmetrie leicht mit einer entsprechend ausgebildeten Befestigungseinrichtung Umgreifen läßt.

Vorteilhafterweise wird die Befestigungseinrichtung auf die Eingriffserstreckung aufgeschoben oder aufgerastet. Dabei muß, wie oben bereits angeführt, die Befestigungseinrichtung dementsprechend ausgebildet sein.

Um zu verhindern, daß die Befestigungseinrichtung von dem Wellrohr mit Merkmalen gemäß der Erfindung rutschen kann, wird vorteilhafterweise am Ende einer Eingriffserstreckung, die sich beispielsweise über mehrere Wellenberge erstreckt, eine Stoppeinrichtung angeordnet, um die Bewegbarkeit der Befestigungseinrichtung zu begrenzen. Eine solche Stoppeinrichtung kann auch in einem benachbarten Wellenberg zu sehen sein, falls sich die Eingriffserstreckung nicht über die Höhe der Wellenberge in Radialrichtung hinaus erstreckt. Auch kann beim Korrugationsprozeß eine Eingriffserstreckung in einem Wellenberge nur halb vorgesehen werden, so daß die andere Hälfte des Wellenberges, in dem die Eingriffserstreckung nicht vorgesehen ist, als Stoppeinrichtung dient. Hierdurch kann die Bewegbarkeit der Befestigungseinrichtung relativ zu der Eingriffserstreckung vorteilhaft begrenzt werden.

Um ein Verrutschen des Wellrohres relativ zu der Befestigungseinrichtung zu verhindern, können vorteilhafterweise an der Eingriffserstreckung und/oder an der Befestigungseinrichtung Rastmittel vorgesehen sein, um die Eingriffserstreckung mit der Befestigungseinrichtung zu verrasten.

Vorteilhafterweise kann die Befestigungseinrichtung einen Fortsatz bspw. einen Rastfortsatz, aufweisen, um die Befestigungseinrichtung an einem Gegenstand festzulegen. Natürlich kann hier auch ein Schraubfortsatz, ein Steckbolzenfortsatz oder ein sonstwie ausgebildeter Fortsatz vorgesehen sein, so lange dieser nur in einen Halteeingriff mit dem Gegenstand treten kann, an dem das Wellrohr mit Merkmalen gemäß der Erfindung festzulegen ist.

Die Befestigungseinrichtung der erfindungsgemäßen Wellrohrbefestigungsanordnung kann mit Stützflächen versehen sein, die eine bevorzugt vorgespannte Abstützung an einem Gegenstand ermöglichen, um Vibrationen oder dergleichen zu dämpfen. Dabei wirken die Stützflächen vorteilhafterweise mit dem Fortsatz zur Festlegung der Befestigungseinrichtung an einem Gegenstand zusammen. So ist etwa ein Rastabschnitt der Befestigungseinrichtung unterhalb einer durch zwei Stützflächen aufgespannten Ebene vorgesehen, so daß die Stützflächen beim Verrasten der Befestigungseinrichtung ausgelenkt werden, um einen Gegendruck aufzubauen, der zusätzlich dazu führt, daß beispielsweise zangenartige Umgriffsbereiche der Befestigungseinrichtung abgestützt und damit versteift werden, so daß die Verbindung zwischen der Befestigungseinrichtung und der Eingriffserstreckung mechanisch noch mehr stabilisiert wird.

Nachfolgend wird die vorliegende Erfindung anhand zweier Ausführungsformen näher erläutert. Dabei werden unter Bezugnahme auf die beigefügten Figuren weitere Merkmale gemäß der Erfindung, weitere Zielsetzungen und Vorteile der erfindungsgemäßen Ausführungsform offenbart, wobei in den Darstellungen
- Fig. 1: eine bevorzugte Ausführungsform in einer querschnittlichen Darstellung zeigt;
- Fig. 2: eine weitere Ausführungsform mit Merkmalen gemäß der Erfindung-ebenfalls in einer querschnittlichen Darstellung zeigt;
- Fig. 3: eine weitere Ausführungsform in einer Querschnittsdarstellung; und
- Fig. 3A: eine querschnittliche Darstellung eines Außenrohres zu dem Wellrohr gemäß Figur 3.

In den Figuren werden gleiche oder funktionsgleiche Bestandteile mit den gleichen Bezugszeichen bzw. mit ähnlichen Bezugszeichen (bspw. 12, 12a, 12b) benannt, so daß sich eine doppelte Erörterung gleicher oder wenigsten funktionsgleicher Bestandteile erübrigt.

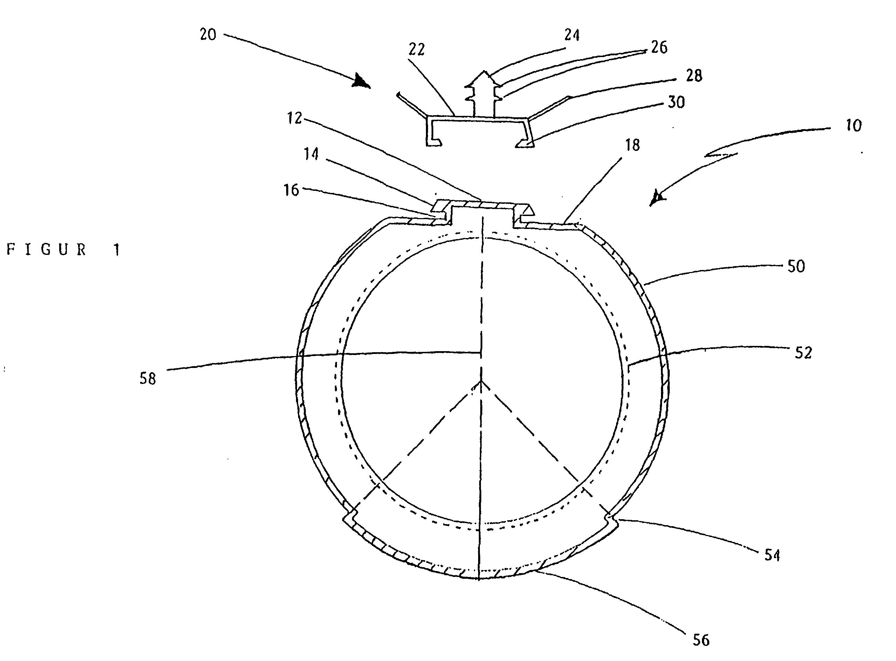

In Fig. 1 ist ein Rohr mit Merkmalen gemäß der Erfindung allgemein mit dem Bezugszeichen 10 versehen worden. Eine Befestigungseinrichtung ist über das Bezugszeichen 20 zu identifizieren.

Das Wellrohr 10 kann prinzipiell eine beliebige Form aufweisen. Es kann mit einem Längsschlitz versehen sein; es kann mit Einrichtungen zum Verschließen des Längsschlitzes ausgebildet sein; es kann oval oder rechteckig ausgebildet sein. Das Wellrohr 10 weist in der dargestellten Ausführungsform eine Verdrehsicherung 54, 56 auf, um bspw. in Eingriff mit Rohrabschnitten zum Verschließen eines eventuell geschlitzten Rohres gelangen zu können. Wie gesagt, kann jedoch die Ausbildung eines Wellrohres beliebig sein, und die vorliegende Beschreibung beschäftigt sich lediglich mit der Ausbildung eines Wellrohres im Hinblick auf einen Fuß 12 bzw. eine Eingriffserstreckung 12. Auch kann der Fuß bzw. die Eingriffserstreckung 12 selbst als Verdrehsicherung dienen.

Das Wellrohr 10 mit dem pilzartigen bzw. T-förmigen Fuß 12 ist symmetrisch zu der Achse 58 ausgebildet. Diese Achse 58 fällt vorteilhafterweise in die Trennebene der Halbformen eines Korrugators, so daß es möglich wird, den Fuß 12 beim Auseinanderfahren der Formhälften des Korrugators aus diesen zu lösen.

Der Fuß bzw. die Eingriffserstreckung 12 ist zwischen einem Wellental 52 einer Wellung und einem Wellenberg 50 einer Wellung des Wellrohres 10 ausgebildet.

Der Fuß 12 weist seitliche Erstreckungen 14 auf, die oberhalb von Ansatzschultern 18 ausgeformt sind und zwischen denen Eingriffsbereiche 16 ausgeformt sind.

Die dem Fuß 12 zugeordnete Befestigungseinrichtung 20 weist 2 zangenartige Umgriffsbereiche 30 auf, die in Eingriff mit dem Fuß 12 gelangen können und sich in ihrer Funktionsposition konkret in dem bzw. in den Eingriffsbereichen 16 befinden. Der Anschlußbereich 22, der an die zangenartigen Umgriffsbereiche 30 anschließt, kann nach der Positionierung der Befestigungseinrichtung 20 am Fuß 12 unmittelbar auf der Oberfläche des Fußes 12 aufsitzen oder aber auch im Abstand zu diesem vorgesehen sein, um beim Biegen des Rohres das Rohr im Eingriffsbereich der Befestigungseinrichtung mit dem Fuß bzw. der Eingriffserstreckung 12 nicht zu sehr zu versteifen, um das Wellrohr 10 besser biegen zu können.

Stützflächen 28, die an den Anschlußbereich 22 angesetzt sind, sind einstückig mit diesem ausgebildet. Die Stützflächen 28 dienen unter anderem als Hebel, um die zangenartigen Umgriffsbereiche bzw. Klauen 30 mechanisch in ihrer Funktionsposition am Fuß 12 zu stabilisieren. Ferner dienen die Stützflächen 28 auch dazu, eine spielfreie Anlage an einer unebenen Oberfläche eines Gegenstandes zu fördern und Vibrationen oder dergleichen aufzunehmen bzw. zu dämpfen.

Der Anschlußbereich 22 umfaßt auch einen Befestigungsfortsatz 24, der hier als Rastfortsatz ausgebildet ist. Dementsprechend sind Rastnasen bzw. Rastbereiche 26 an dem Fortsatz 24 vorgesehen. Wird die Befestigungseinrichtung 20 bspw. innerhalb eines Motorraums eines Kraftfahrzeuges in eine Öffnung gesteckt, so können die Rastnasen 26 mit den Rändern der Öffnung in einen verrastenden Eingriff gelangen und die Stützflächen 28 stützen die Befestigungseinrichtung 20 an der Oberfläche des Kraftfahrzeuges ab.

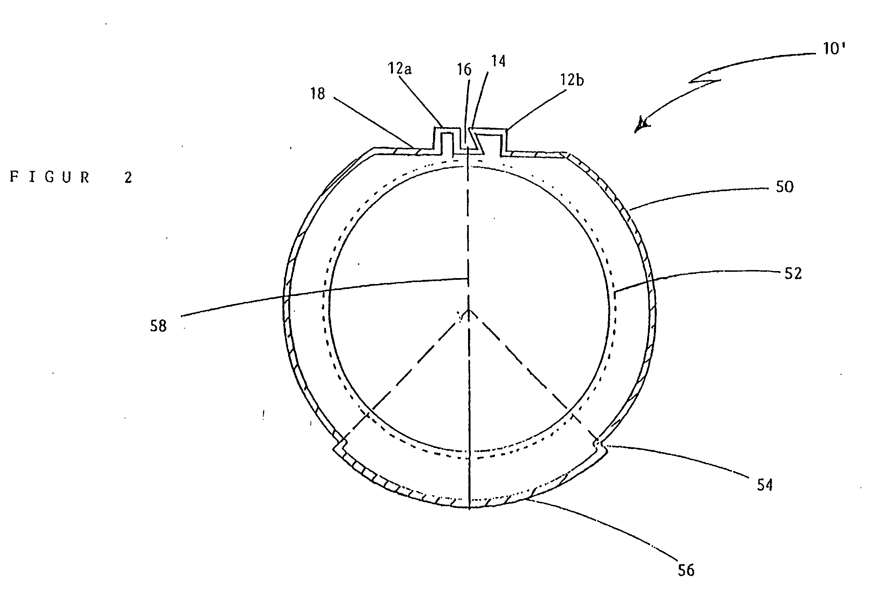

In der Fig. 2 ist eine weitere Ausführungsform eines Wellrohres mit Merkmalen gemäß der Erfindung dargestellt und mit den Bezugszeichen 10' benannt.

Im Hinblick auf das Wellrohr 10' ist festzuhalten, daß dieses in Bezug auf dessen Schnittebene 58 nicht so günstig ist, wie das Wellrohr gem. Fig. 1. Wie es zu erkennen ist, ist bei dieser Ausführungsform eines Wellrohres 10' die Eingriffserstreckung 12a, 12b nicht so ausgebildet, daß diese sich bei dem Auseinanderfahren der Formhälften eines Korrugators von diesen trennen ließe. Hier wäre es also erforderlich, den Fuß 12a, 12b bzw. die Eingriffserstreckung zunächst halb mit dem Rohr mitzufertigen, wobei der Eingriffsbereich 16 noch nicht vorgesehen ist. Der Eingriffsbereich 16 könnte dann später nachträglich in die Eingriffserstreckung eingeprägt werden, wobei dann das Rohrmaterial wiederum wenigstens im Bereich der Eingriffserstreckung bzw. des Fußes 12a, 12b erwärmt werden müßte. Natürlich könnte die hier dargestellte Eingriffserstreckung auch insgesamt nachträglich an dem Außenumfang eines Rohres vorgesehen werden. Diese Verfahrensweise sind jedoch relativ aufwendig, so daß im Vergleich mit der Ausführungsform nach Fig. 2 die Ausführungsform nach Fig. 1 deutlich zu bevorzugen ist.

Bei der Ausführungsform eines Wellrohres 10' gem. Fig. 2 spielt der Eingriffserstreckungsteil 12a in Verbindung mit der seitlichen Erstreckung bzw. dem Überstand 14 des Eingriffserstreckungsteils 12b die Rolle der seitlichen Erstreckungen 14 der Eingriffserstreckung bzw. des Fußes 12 gem. Fig. 1.

Eine entsprechende Befestigungseinrichtung (nicht dargestellt), die bspw. auf den Oberflächen der Eingriffserstreckung 12a, 12b aufsitzt und mit einem Haltefortsatz (nicht dargestellt) in den Eingriffsbereich 16 eingreift, wäre dementsprechend vorzusehen, um die Ausführungsform 10' gemäß Fig. 2 in der Art, wie das Wellrohr gem. Fig. 1 festgelegt ist, an einem Gegenstand festzulegen.

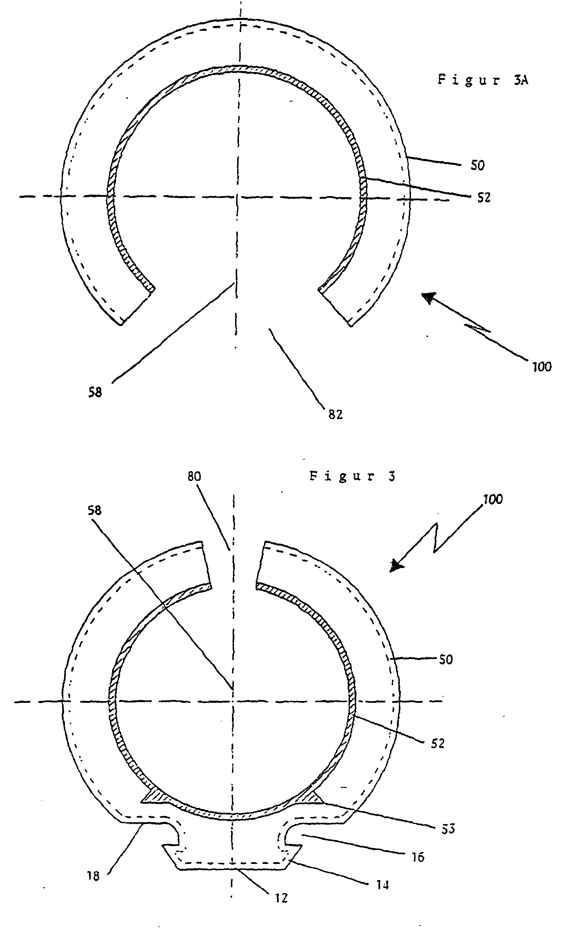

Die Figur 3 zeigt eine querschnittliche Darstellung eines weiteren Wellrohres 100 mit Fuß, daß dafür konzipiert ist, im Betrieb von dem Wellrohr 100 gemäß Figur 3A umgeben zu sein.

Das Wellrohr 100 mit Fuß 12 gemäß Figur 3 ist bezüglich des Fußes bzw. der Eingriffserstreckung 12 prinzipiell entsprechend der Ausführungsform nach Figur 1 ausgebildet. Die Schnittdarstellung läßt hier lediglich noch zusätzlich Verdrehsicherungen 53 erkennen, die prinzipiell zu den Schultern 18 korrespondieren können, die auch in Figur 1 erkennbar sind. Die Verdrehsicherung 53 am Innenumfang des Wellrohres 100 ergibt sich aufgrund des Fertigungsverfahrens, wobei mittels Über- oder Unterdruck Material in Formbackenhälften gepreßt oder gesogen wird, während die Formbackenhälften eine geschlossene Form erzeugen.

Die Ausführungsform 100 gemäß Figur 3 weist einen Längsschlitz 80 auf, um beispielsweise Kabel oder dergleichen in den Längsschlitz einlegen zu können. Der Schlitz kann breiter sein oder auch so schmal sein, daß die rechts und links aneinander angrenzenden Wellungsbereiche unmittelbar aneinander anstoßen.

Wie zu erkennen ist, ist gemäß Figur 3 der Fuß 12 höher ausgebildet und kann dementsprechend neben seiner Haltefunktion auch als Verdrehsicherung dienen, und zwar für das Außenwellrohr gemäß Figur 3A. Das Außenwellrohr ist prinzipiell als übliches Wellrohr ausgebildet, dessen Wellungen, d.h. dessen Wellentäler 52 und Wellenberge 50 passend zu den Wellungen 50, 52 des Rohres 100 gemäß Figur 3 ausgebildet sind, so daß diese ineinander greifen können.

Das Wellrohr 100 gemäß Figur 3A weist einen relativ breiten Schlitz 82 auf, über den das Wellrohr 100 gemäß Figur 3 eingeführt werden kann. Auf diese Weise kann das Wellrohr gemäß Figur 3 verschlossen werden und der Fuß 12 des Wellrohres gemäß Figur 3 kann verhindern, daß das Wellrohr gemäß Figur 3A sich gegenüber dem Wellrohr gemäß Figur 3 verdreht und eventuell den Schlitz 80 freigibt.

Auf diese Weise können elektrische Leitungen, die in dem Wellrohr mit Fuß gemäß Figur 3 enthalten sind, dauerhaft auch durch die Abdeckung des Schlitzes 80 durch das Wellrohr gemäß Figur 3A geschützt werden, wobei der Fuß 12, der im Einbauzustand in einer Befestigungseinrichtung 20 gemäß Figur 1 gehalten wird, ein Verdrehen des Außenwellrohres gemäß Figur 3A gegenüber dem Innenwellrohr 100 mit Fuß 12 gemäß Figur 3 verhindern könnte.

Auch hier ist festzuhalten, daß der Fuß 12 prinzipiell beliebige Abmessungen aufweisen kann, wobei jedoch das Materialangebot während des Fertigungsprozesses in der Praxis beschränkt ist, so daß die Gesamtaußenfläche des Wellrohres ohne Fuß im Wesentlichen der Außenoberfläche des dargestellten Wellrohres gemäß Figur 3 entsprechen sollte. Ansonsten könnte die Wandungsstärke des Wellrohres zu gering werden, so daß die Stabilität des Wellrohres erschüttert wird.

Festzuhalten ist auch, daß das auch als Verschlußstück bezeichenbare Wellrohr gemäß Figur 3A abschnittweise auf das Wellrohr gemäß Figur 3 aufgeschnappt werden kann. Ferner ist festzuhalten, daß sich eine besonders bevorzugte Ausführungsform ergibt, wenn die Schultern 53 am Innenumfang des Wellrohres gemäß Figur 3 als Verdrehsicherung dienen, so daß der Fuß 12 frei von der Aufgabe gehalten werden kann, als Verdrehsicherung für das Verschlußstück bzw. das Außenrohr gemäß Figur 3A zu dienen.

Die Verdrehsicherung 53 kann generell in jedem Wellental vorgesehen sein oder aber auch lediglich in bestimmten Wellentälern, beispielsweise in jedem zweiten oder dritten der Wellentäler des Wellrohres 100 mit Fuß 12 gemäß Figur 3.

Um das Wellrohr gemäß Figur 3 durch die Verdrehsicherung nicht zu versteifen, wird es bevorzugt, wenn die Verdrehsicherung nicht über das gesamte Wellrohr in Längsrichtung erstreckt ist, sondern lediglich abschnittsweise. Die Verdrehsicherungen 53 können benachbarte Wellenberge miteinander verbinden, wobei dann jedoch wiederum eine Versteifung des Wellrohres auftritt.

Bevorzugt ist, wenn die Verdrehsicherungen 53 in den Wellentälern oder gegebenenfalls in den Wellenbergen als separate Einzelerstreckungen vorgesehen sind, da dann die Flexibilität kaum oder gar nicht beeinträchtigt wird.

## Patentansprüche

1. Wellrohr, mit einer Eingriffserstreckung (12; 12a, 12b) senkrecht zur Längserstreckungsrichtung des Wellrohres (10, 10'), **dadurch gekennzeichnet, dass** die Eingriffserstreckung (12; 12a, 12b) einen in Umfangsrichtung des Wellrohres größer dimensionierten Abschnitt (14) aufweist, der radial von dem Innendurchmesser (52) des Wellrohres weiter entfernt ist, als ein in Umfangsrichtung des Wellrohres kleiner dimensionierter Abschnitt, so dass sich ein Eingriffsbereich (16) ergibt, der hinterschnitten ist.

2. Wellrohrbefestigungsanordnung mit einem Wellrohr gemäß dem Anspruch 1 und einer Befestigungseinrichtung, wobei die Befestigungseinrichtung (20) komplementär zu der Eingriffserstreckung (12; 12a, 12b) ausgebildet ist, um mit der Eingriffserstreckung in einem Befestigungseingriff zu treten.

3. Wellrohr bzw. Wellrohrbefestigungsanordnung nach einem der Ansprüche 1 oder 2, **dadurch gekennzeichnet, dass** die Eingriffserstreckung nur auf bzw. in den Wellenbergen oder Wellungen des Wellrohrs ausgebildet ist, wobei insbesondere eine begrenzte Anzahl von bevorzugt zueinander benachbarten Wellenbergen mit der Eingriffserstreckung (12; 12a, 12b) ausgebildet sind.

4. Wellrohr bzw. Wellrohranordnung nach einem der Ansprüche 1 bis 3, **dadurch gekennzeichnet, dass** die Wellungen (50) selbst die Eingriffserstreckung (EN) enthalten, wobei sich diese bevorzugt vom Wellental bis zum Wellenberg erstrecken.

5. Wellrohr bzw. Wellrohrbefestigungsanordnung nach einem der Ansprüche 2 bis 4, **dadurch gekennzeichnet, dass** die Befestigungseinrichtung (20) die Eingriffserstreckung (12; 12a, 12b) wenigstens teilweise umgreift bzw. wenigstens teilweise in diese eingreift und bevorzugt auf die Eingriffserstreckung aufschiebbar bzw. aufrastbar ist.

6. Wellrohr bzw. Wellrohrbefestigungsanordnung nach einem der Ansprüche 1 bis 5, **dadurch gekennzeichnet, dass** an einem Endbereich einer bspw. über mehrere Wellenberge erstreckten Eingriffserstreckung eine Stoppeinrichtung angeordnet ist.

7. Wellrohr bzw. Wellrohrbefestigungsanordnung nach einem der Ansprüche 2 bis 6, **dadurch gekennzeichnet, dass** an der Eingriffserstreckung und/oder der Befestigungseinrichtung Rastmittel vorgesehen sind, um diese miteinander zu verrasten, wobei bevorzugt die Befestigungseinrichtung einen Fortsatz (24), bspw. einen Rastfortsatz aufweist, um die Befestigungseinrichtung an einem Gegenstand festzulegen.

8. Wellrohr bzw. Wellrohrbefestigungsanordnung nach einem der Ansprüche 2 bis 7, **dadurch gekennzeichnet, dass** die Befestigungseinrichtung (20) Stützflächen (28) aufweist, die eine bevorzugt vorgespannte Abstützung an einem Gegenstand ermöglichen, um Vibrationen oder dergleichen zu dämpfen.

9. Wellrohr bzw. Wellrohrbefestigungsanordnung nach einem der Ansprüche 1 bis 8, **dadurch gekennzeichnet, dass** die Eingriffserstreckung des Wellrohres (10, 10') in einem Längsschlitz eines das Wellrohr (10, 10') umgebenden weiteren Wellrohres zu liegen kommt, um als Verdrehsicherung des Wellrohres (10, 10') gegenüber dem längsgeschlitzten Wellrohr einsetzbar zu sein.

10. Wellrohr bzw. Wellrohranordnung nach einem der Ansprüche 1 bis 9, **dadurch gekennzeichnet, dass** dieses Erhebungen (56; 53) aufweist, die in den Wellentälern bzw. auf den Wellenbergen angeordnet sind, wobei die Erhebungen (53) bevorzugt freistehend oder durchgehend ausgebildet sind.

## Claims

1. A corrugated tube, having an engagement extension (12; 12a, 12b) perpendicularly to the direction of the longitudinal extension of the corrugated tube (10, 10'),
**characterised in that** the engagement extension (12; 12a, 12b) comprises a portion (14) having greater dimensions in the peripheral direction of the corrugated tube, which is radially further away from the internal diameter (52) of the corrugated tube than a portion having smaller dimensions in the peripheral direction of the corrugated tube, so that an undercut engagement region (16) is produced.

2. A corrugated tube fastening arrangement having a corrugated tube according to Claim 1 and a fastening device, wherein the fastening device (20) has a complementary design to the engagement extension (12; 12a, 12b) so as to come into a fastening engagement with the engagement extension.

3. A corrugated tube and corrugated tube fastening arrangement according to one of Claims 1 or 2,
**characterised in that** the engagement extension is only constructed on or in the wave crests or undulations of the corrugated tube, with in particular a limited number of preferably mutually adjacent wave crests being constructed with the engagement extension (12; 12a, 12b).

4. A corrugated tube and corrugated tube arrangement according to one of Claims 1 to 3,
**characterised in that** the undulations (50) themselves contain the engagement extension (EN), with this preferably extending from the wave trough to the wave crest.

5. A corrugated tube and corrugated tube fastening arrangement according to one of Claims 2 to 4,
**characterised in that** the fastening device (20) at least partially encompasses the engagement extension (12; 12a, 12b) or partially engages therein and can preferably be pushed or latched onto the engagement extension.

6. A corrugated tube and corrugated tube fastening arrangement according to one of Claims 1 to 5,
**characterised in that** a stop device is disposed at one end region of a engagement extension extended over several wave crests.

7. A corrugated tube and corrugated tube fastening arrangement according to one of Claims 2 to 6,
**characterised in that** locking means are provided on the engagement extension and/or the fastening device in order to lock them together, the fastening device preferably having a prolongation (24), for example a locking prolongation, so as to fix the fastening device to an object.

8. A corrugated tube and corrugated tube fastening arrangement according to one of Claims 2 to 7,
**characterised in that** the fastening device (20) comprises support faces (28) which enable a preferably prestressed support on an object so as to dampen vibrations or the like.

9. A corrugated tube and corrugated tube fastening arrangement according to one of Claims 1 to 8,
**characterised in that** the engagement extension of the corrugated tube (10, 10') comes to lie in a longitudinal slot of a further corrugated tube surrounding the corrugated tube (10, 10') so that it can be used as an anti-torsion device for the corrugated tube (10, 10') in relation to the longitudinally slit corrugated tube.

10. A corrugated tube and corrugated tube arrangement according to one of Claims 1 to 9,
**characterised in that** this comprises raised portions (56; 53) which are disposed in the wave troughs and on the wave crests respectively,. with these raised portions (53) preferably having a self-supporting or continuous construction.

## Revendications

1. Tube annelé, avec une extension de prise (12 ; 12a, 12b) perpendiculaire au sens d'extension longitudinale du tube annelé (10, 10'), **caractérisé en ce que** l'extension de prise (12 ; 12a, 12b) présente une section (14) plus fortement dimensionnée dans le sens périphérique du tube annelé, qui est plus éloignée radialement du diamètre intérieur (52) du tube annelé qu'une section plus faiblement dimensionnée dans le sens périphérique du tube annelé, de sorte qu'il résulte une zone de prise (16), qui est contre-dépouillée.

2. Agencement de fixation de tube annelé avec un tube annelé selon la revendication 1 et un dispositif de fixation, le dispositif de fixation (20) étant constitué de manière complémentaire par rapport à l'extension de prise (12 ; 12a, 12b), pour venir en prise de fixation avec l'extension de prise.

3. Tube annelé et agencement de fixation de tube annelé selon les revendications 1 ou 2, **caractérisé en ce que** l'extension de prise n'est constituée que sur ou dans les sommets d'ondes ou les ondulations du tube annelé, un nombre limité de sommets, de préférence adjacents entre eux, étant en particulier constitué avec l'extension de prise (12 ; 12a, 12b).

4. Tube annelé et respectivement agencement de fixation de tube annelé selon l'une des revendications 1 à 3, **caractérisé en ce que** les ondulations (50) contiennent elles-mêmes l'extension de prise (EN), celle-ci s'étendant de préférence du creux jusqu'au sommet d'onde.

5. Tube annelé et respectivement agencement disposition de fixation de tube annelé selon l'une des revendications 2 à 4, **caractérisé en ce que** le dispositif de fixation (20) enveloppe au moins partiellement l'extension de prise (12 ; 12a, 12b) on pénètre au moins partiellement dans celle-ci et peut, de préférence, coulisser sur ou s'encliqueter dans l'extension de prise.

6. Tube annelé et respectivement agencement de fixation de tube annelé selon l'une des revendications 1 à 5, **caractérisé en ce qu'**un dispositif d'arrêt est disposé à une zone d'extrémité d'une extension de prise qui s'étend par ex. sur plusieurs sommets d'ondes.

7. Tube annelé et respectivement agencement de fixation de tube annelé selon l'une des revendications 2 à 6, **caractérisé en ce que** des moyens d'encliquetage sont prévus sur l'extension de prise et / ou sur le dispositif de fixation, pour enclencher ceux-ci ensemble, le dispositif de fixation présentant de préférence un prolongement (24), par ex. un prolongement d'encliquetage, pour fixer le dispositif de fixation à un objet.

8. Tube annelé et respectivement agencement de fixation de tube annelé selon l'une des revendications 2 à 7, **caractérisé en ce que** le dispositif de fixation (20) présente des surfaces d'appui (28), qui permettent un appui de préférence précontraint sur un objet, pour amortir les vibrations ou analogues.

9. Tube annelé et respectivement agencement de fixation de tube annelé selon l'une des revendications 1 à 8, **caractérisé en ce que** l'extension de prise du tube annelé (10, 10') vient à être située dans une fente oblongue d'un autre tube annelé qui entoure le tube annelé (10, 10'), pour être insérable en tant que protection contre les torsions du tube annelé (10, 10') vis-à-vis du tube annelé ayant la fente oblongue.

10. Tube annelé et respectivement agencement de tube annelé selon l'une des revendications 1 à 9, **caractérisé en ce que** celui-ci présente des bosses (56 ; 53) qui sont disposées dans les creux d'ondes ou sur les sommets d'ondes, les bosses (53) étant constituées de préférence de manière isolée ou continue.
